# EUROPÄISCHE PATENTSCHRIFT

(11) **EP 0 773 624 B1**
(45) Veröffentlichungstag und Bekanntmachung des Hinweises auf die Patenterteilung: **09.06.1999**
(21) Anmeldenummer: 96117799.5
(22) Anmeldetag: 07.11.1996
(51) Int. Cl.: H02P 6/10

(54) **Motorsteuerung für elektronisch kommutierende Gleichstrommotoren zur Kompensation von Drehmomenteinbrüchen**
Engine control for electronically commutated DC motors to compensate torque notches
Contrôle de moteur pour moteurs à courant continu par commutation électronique pour balancer des chutes du couple

(30) Priorität: 10.11.1995 DE 19541832
(43) Veröffentlichungstag der Anmeldung: 14.05.1997
(73) Patentinhaber: DEUTSCHE THOMSON-BRANDT GMBH, 78048 Villingen-Schwenningen (DE)
(72) Erfinder: Gleim, Günter, 78052 Villingen-Schwenningen (DE); Link, Hermann, 78166 Donaueschingen (DE)
(74) Vertreter: Ahrens, Thomas, Dipl.-Phys.

(56) Entgegenhaltungen:
- EP-A- 0 440 534
- WO-A-94/28616
- US-A- 4 511 827
- US-A- 5 159 218
- IEEE TRANSACTIONS ON INDUSTRY APPLICATIONS, Bd. 25, Nr. 3, 1.Mai 1989, Seiten 441-450, XP000039075 YOSHIHIRO MURAI ET AL: "TORQUE RIPPLE IMPROVEMENT FOR BRUSHLESS DC MINIATURE MOTORS"
- PATENT ABSTRACTS OF JAPAN vol. 012, no. 101 (E-595), 2.April 1988 & JP 62 233069 A (MITSUBISHI ELECTRIC CORP), 13.Oktober 1987,

## Beschreibung

Die Erfindung betrifft eine Motorsteuerung mit einer an die Wickelstränge eines Motors angeschlossenen elektronischen Kommutierung, wobei zur Verhinderung von Drehmomenteinbrüchen auf die momentan aktive Spule des Motors ab dem Kommutierungszeitpunkt ein vorgegebener Zusatzstrom geschaltet wird.

Aus der US-4,511,827 ist eine Steuerung bekannt, die einen elektronisch kommutierenden Motor so antreibt, daß Drehmomentschwankungen unterdrückt werden. Dabei umfaßt diese Vorrichtung einen Sensor zum Bestimmen des Rotorortes, mit anderen Worten des Kommutierungszeitpunktes, und eine Steuerung, die dieses Signal verarbeitet, so daß der entsprechenden Spule ab dem Kommutierungszeitpunkt ein Zusatzstrom zur Verhinderung eines Drehmomenteinbruchs zugeführt wird.

Allerdings hat sich bei der bekannten Lösung gezeigt, daß die Zufuhr eines vorbestimmten Stromes zu der Spule nur innerhalb eines bestimmten Bereichs des Motorstroms die Drehmomenteinbrüche kompensiert. Da aber beispielsweise in einem Videorekorder die Ströme in einem Betriebsmode (z.B. Play oder Long-Play), aufgrund unterschiedlicher mechanischer Lasten, wie z.B. bei unterschiedlichen Temperaturen oder Kassetten sehr unterschiedlich sein können, bringt das bekannte Verfahren keine zufriedenstellenden Ergebnisse.

Der Erfindung liegt daher die Aufgabe zugrunde, eine Motorsteuerung zu schaffen, bei der Drehmomenteinbrüche auch bei unterschiedlichen Motorbelastungen vermieden werden.

Die Aufgabe wird durch die Merkmale des Anspruchs 1 gelöst. Bevorzugte Ausgestaltungen der Erfindung sind in den Unteransprüchen angegeben.

Erfindungsgemäß wird bei einer Motorsteuerung für elektronisch kommutierende Gleichstrommotoren, in der zur Verhinderung von Drehmomenteinbrüchen ab dem Kommutierungszeitpunkt ein zusätzlicher Strom auf die aktive Spule geschaltet wird, die Dauer und/oder Amplitude des zusätzlichen Strompulses als eine Funktion der Motorbelastung bestimmt. Mit anderen Worten, die Dauer und/oder Amplitude des zusätzlichen Strompulses sind variabel und werden aus der Belastung des Motors abgeleitet, wobei anschaulich der zusätzliche Strompuls umso länger (höher) ist, je höher die Motorbelastung ist.

Dadurch wird vorteilhafterweise erreicht, daß Drehmomenteinbrüche unabhängig von der Produktionsstreuung der Motoren, den Temperaturbereichen sowie der Alterung automatisch optimal kompensiert werden.

Üblicherweise steuert die erfindungsgemäße Motorsteuerung den Motor über eine sog. Pulsweitenmodulation (CPWM bzw. PWM) der Steuerpulse. Für die Dauer des zusätzlichen Stroms wird das PWM-Signal der Motorsteuerung auf "1" gehalten. Der Kommutierungszeitpunkt, ab dem der zusätzliche Strom aufgeschaltet wird, kann durch einen Sensor bestimmt werden.

Die Motorbelastung wird aus dem aufgenommenen Motorstrom bestimmt, wobei der Motorstrom beispielsweise durch einen Meßwiderstand, der in den Motorstromkreis geschaltet ist, oder aus dem Verhältnis Pulsdauer zu Pulspause des PWM-Signals und/oder aus der Motordrehzahl bestimmt werden kann.

Weiterhin kann die erfindungsgemäße Steuerung einen Integrator aufweisen, der aus dem Puls/Pausenverhältnis des CPWM-Signals ein Steuersignal (S) erzeugt. Der Beginn der Integration der CPWM-Steuersignale wird ebenfalls durch das Eintreffen des Kommutierungssignals bewirkt.

Vorteilhafterweise weist die Steuerung ein Flip-Flop auf, dessen Q-Ausgang mit den CPWM-Steuersignalen über ein "ODER"-Gatter verschaltet ist, so daß mit dem Eintreffen des Kommutierungssignals der Q-Ausgang auf logisch "1" geschaltet wird, wobei der Q-Ausgang des Flip-Flops wieder zurückgesetzt wird, wenn das Steuersignal mit einer Referenzspannung übereinstimmt. Der Vergleich zwischen der Referenzspannung und dem Steuersignal erfolgt vorzugsweise mittels eines Differenzverstärkers. Dadurch wird auch das Ende der Integration der CPWM-Signale bewirkt.

Eine bevorzugte Ausführungsform der Erfindung ist nachfolgend anhand der Figuren erläutert, in denen:
Fig. 1 ein Schaltdiagramm des erfindungsgemäßen Kompensationsteils der Motorsteuerung zeigt,
Fig. 2a und 2b Taktdiagramme der zur Steuerung notwendigen Ein- und Ausgangssignale zeigt, und
die Figuren 3a und 3b den Stromverlauf in einem elektronisch kommutierten Motor ohne und mit Kompensation zeigen.

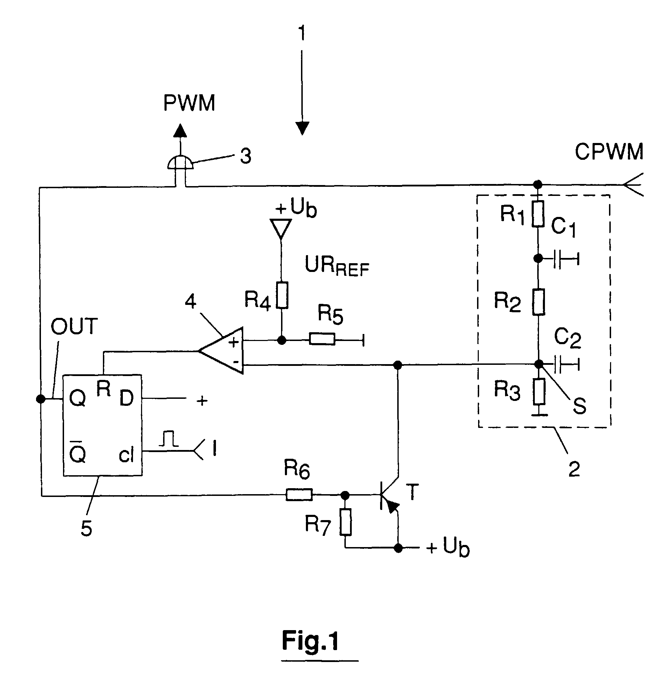

Fig. 1 zeigt die Logikschaltung zur Kompensation von Drehmomenteinbrüchen bei digital angesteuerten, elektronisch kommutierenden Motoren. Ein digitales Motorsteuersignal CPWM, in dem aus dem Pulspausenverhältnis die Motorbelastung ableitbar ist, wird auf den Eingang der Kompensationsschaltung 1 gegeben. Aus diesem Signal CPWM wird mittels eines Integrators 2 ein Steuersignal S abgeleitet. Der Integrator 2 besteht vorzugsweise aus drei seriellen Widerständen R₁, R₂ und R₃ sowie zwei Kondensatoren C₁ und C₂, wobei C₁ zwischen Masse (Bezugspotential) und der Verbindung von R₁ und R₂ beziehungsweise C₂ zwischen Masse und der Verbindung von R₂ und R₃ elektrisch angeordnet ist und das Steuersignal S an C₂ gebildet wird. Weiterhin wird das Steuersignal CPWM zur Steuerung des nicht-dargestellten Motors auf einen Eingang eines ODER-Gatter 3 gegeben, so daß am Ausgang des ODER-Gatters 3 ein PWM-Steuersignal erscheint, das den ebenfalls nicht-dargestellten PWM-Leistungsstufen zugeführt wird, um den Motorstrom in den einzelnen Motorspulen bzw. - strängen bereitzustellen.

Das mit dem Integrator 2 erzeugte Steuersignal S wird dem invertierenden Eingang eines als Komparator 4 ausgebildeten Differenzverstärker zugeführt, an dessen nicht-invertierenden Eingang eine Referenzspannung U_{REF} angelegt ist, die über einen Spannungsteiler aus Widerständen R₄, R₅ definiert wird. Der Ausgang des Komparators 4 wird auf den Reset-Eingang eines Flip-Flops 5 gegeben, das durch ein D-Flip-Flop gebildet wird. Der D-Eingang des Flip-Flops 5 liegt auf positivem Potential, das z.B. von einer Betriebsspannung U_{b} abgeleitet sein kann. Durch das Eintreffen des Kommutierungssignals I für den Motorantrieb wird das Flip-Flop 5 über den Clock-Eingang aktiviert, so daß am Q-Ausgang eine logische "1" anliegt. Der Q-Ausgang des Flip-Flops 5 wird auf den anderen Eingang des ODER-Gatters 3 gegeben. Durch die Verknüpfung des CPWM-Signals mit dem Q-Ausgang mittels dieser ODER-Schaltung wird das PWM-Signal für die Leistungsstufen folglich auf logisch "1" bzw. auf "High"-Pegel gehalten, so daß den Motorsträngen ein zusätzlicher Strom zugeführt wird. Der Q-Ausgang des Flip-Flops 5 bleibt solange auf logisch "1", bis am Ausgang des Komparators 4 die logische "1" erscheint, so daß über den Reset-Eingang R des Flip-Flops 5 das Flip-Flop zurückgesetzt wird und demzufolge am Q-Ausgang eine logische "0" anliegt bzw. auf "Low"-Pegel gehalten wird. Zwischen dem invertierenden Eingang des Komparators 4 (Steuersignal S) und dem Q-Ausgang des Flip-Flops 5 ist ein npn-Transistor T geschaltet, derart, daß die Basis über einen Widerstand R₆ mit dem Q-Ausgang verbunden ist. Der auf positivem Potential der Betriebsspannung U_{b} liegende Emitter des Transistors T ist über einen Widerstand R₇ mit der Basis verbunden, während der Kollektor von Transistor T mit dem invertierenden Eingang des Komparators 4 verbunden ist. Mit dem Hochschalten des Q-Ausgangs des Flip-Flops 5 auf logisch "1" wird der Transistor T gesperrt, während eine logisch "0" am Q-Ausgangs des Flip-Flops 5 den Transistor T öffnet bzw. leitend steuert.

Der Transistor T hat somit die Funktion eines elektronischen Schalters, mit dem in Abhängigkeit vom logischen Signalzustand am Q-Ausgang des FLip-Fops 5 der Kondensator C₂, an dem das Steuersignal S gebildet wird, auf das positive Potential der Betriebsspannung U_{b} geladen werden kann oder, wenn der Q-Ausgang auf logisch "0" bzw. "Low"-Pegel geschaltet ist, auf das Potential entladen werden kann, das sich durch die ständige Integration der über den Widerstand R₁ ständig zugeführten CPWM-Signale am Kondenstor C₁ ergibt. Die Entladezeitkonstante des Kondensators C₂ wird dabei im wesentlichen durch die Parallelschaltung bestimmt aus dem Widerstand R₃ und dem, mit dem Kondensator C₁ für die Entladung eine Serienschaltung bildenden Widerstand R₂. Die Ladezeitkonstante des Kondensators C₂ wird mit dem Widerstand der leitend gesteuerten Emitter-Kollektor-Strecke des Transistors T bestimmt.

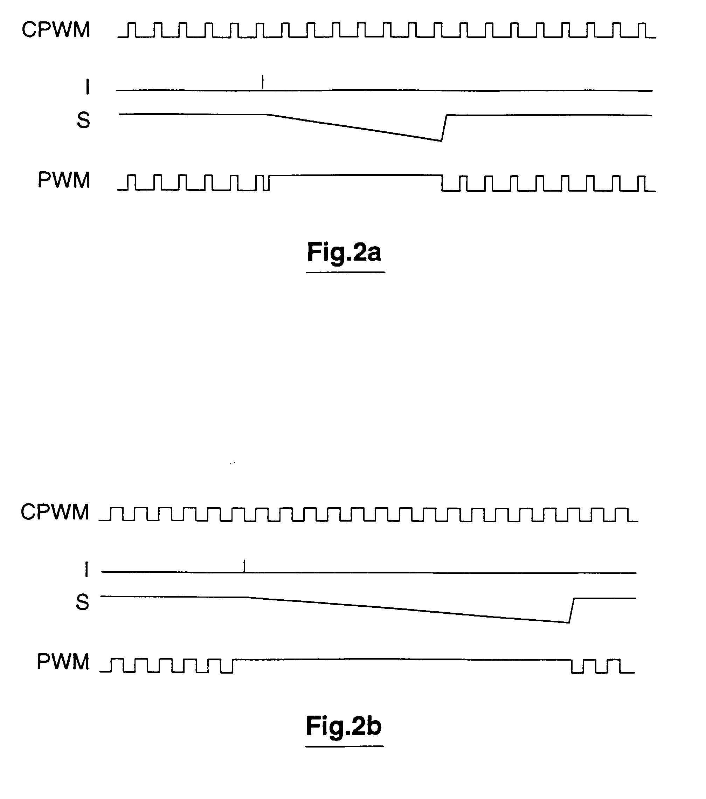

Die Figuren 2a und 2b zeigen den zeitlichen Verlauf der verschiedenen Steuersignale, wobei die Fig. 2a den Fall einer geringen Motorbelastung während die Fig. 2b den Fall einer großen Motorbelastung darstellt. Der obere Taktverlauf der Fig. 2a zeigt das Motorsteuersignal CPWM, wobei das Puls/Pausenverhältnis relativ klein ist. Mit dem Auftreten des Kommutierungssignals I wird der Q-Ausgang des Flip-Flops 5 auf "High"-Pegel geschaltet, so daß der Transistor T gesperrt wird und den Beginn der Erzeugung des Steuersignals S definiert. Das heißt, daß die dem Steuersignal S entsprechende Spannung am Kondensator C₂ demzufolge absinkt, bis das Flip-Flop 5 über den R-Eingang zurückgesetzt wird. Demzufolge ergibt sich am Ausgang des ODER-Gatters 3 der untere Taktverlauf, d.h. während der Dauer des Stromsteuersignals S ist der Ausgang des ODER-Gatters 3 logisch "1", was im vorliegenden Fall in Bezug auf das Bezugspotential positives Potential bedeutet, während logisch "O" z.B. das Bezugspotential ist.

Die Fig. 2b zeigt die gleiche Situation wie die Fig. 2a, jedoch mit einem größeren Puls/Pausenverhältnis des Motorsteuersignales CPWM. Aufgrund des größeren Puls/Pausenverhältnis des Motorsteuersignales CPWM wird der Kondensator C₁ auf eine größere Spannung in Bezug auf die Situation gmäß Fig. 2a geladen. Das hat zur Folge, daß die Entladung von Kondensator C₂ langsamer erfolgt und damit auch der Verlauf des Stromsteuersignals S zeitlich länger ist, so daß am Ausgang des ODER-Gatters 3 die Zeitdauer wesentlich länger ist, an dem dieser Ausgang auf logisch "1" verbleibt.

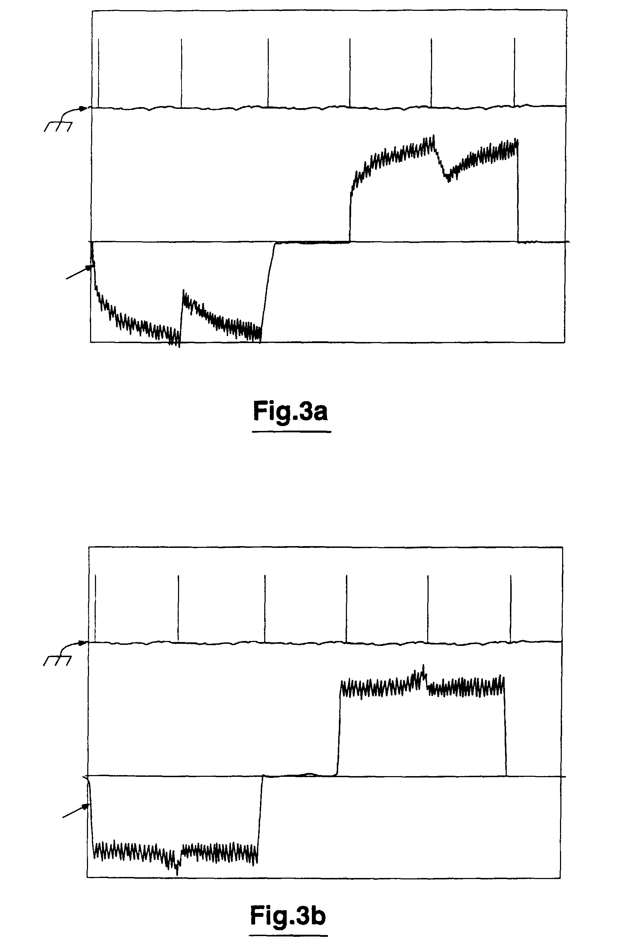

Die Fig. 3a zeigt den Stromverlauf in einem der Motorstränge ohne die erfindungsgemäße Kompensation von Drehmomenteinbrüchen. Im oberen Teil sind die Zeitpunkte der Kommutierung dargestellt. Der untere Teil zeigt den Stromverlauf als Funktion der Zeit. Deutlich zu sehen ist, daß in dem Stromverlauf und damit auch in dem Drehmomentverlauf eines Motors zu den Kommutierungszeitpunkten Einbrüche auftreten.

Im Gegensatz dazu zeigt die Fig. 3b den Stromverlauf in einem der Motorstränge mit eingeschalteter Strom- und/oder Spannungskompensation zur Vermeidung von Drehmomenteinbrüchen. Zu den Kommutierungszeitpunkten ist der Stromverlauf und damit Drehmomentverlauf des Motoers annähernd konstant.

### Bezugszeichenliste

- 1 -: Kompensationsschaltung
- 2 -: Integrator
- 3 -: "ODER"-Gatter
- 4 -: Komparator
- 5 -: Flip-Flop
- T -: Transistor
- R₁ -: Widerstand
- R₂ -: Widerstand
- R₃ -: Widerstand
- R₄ -: Widerstand
- R₅ -: Widerstand
- R₆ -: Widerstand
- R₇ -: Widerstand
- C₁ -: Kondensator
- C₂ -: Kondensator
- S -: Steuersignal
- I -: Kommutierungssignal
- CPWM: Motorsteuersignale
- U_{REF} -: Referenzspannung
- OUT -: Ausgang Flip-Flop
- PWM -: Steuersignal - Motor

## Patentansprüche

1. Motorsteuerung für elektronisch kommutierende Gleichstrommotoren, worin zur Verhinderung von Drehmomenteinbrüchen ab dem Kommutierungszeitpunkt ein zusätzlicher Strom und/oder Spannung auf den aktiven Motorstrang geschaltet wird, **dadurch gekennzeichnet**, daß die Dauer und/oder Amplitude des zusätzlichen Strom- und/oder Spannungspulses aus der Motorbelastung abgeleitet wird.

2. Motorsteuerung nach Anspruch 1, **dadurch gekennzeichnet**, daß der Motor über eine Pulsweitenmodulation (PWM) angesteuert wird.

3. Motorsteuerung nach Anspruch 2, **dadurch gekennzeichnet**, daß das PWM-Signal für die Dauer des zusätzlichen Strom und/oder Spannung auf logisch "1" gehalten wird.

4. Motorsteuerung nach einem der vorangegangenen Ansprüche, **dadurch gekennzeichnet**, daß der Kommutierungszeitpunkt durch einen Sensor bestimmt wird.

5. Motorsteuerung nach einem der vorangegangenen Ansprüche, **dadurch gekennzeichnet**, daß die Motorbelastung aus dem aufgenommenen Motorstrom bestimmt wird.

6. Motorsteuerung nach Anspruch 5, **dadurch gekennzeichnet**, daß der Motorstrom durch einen Meßwiderstand im Motorstromkreis bestimmt wird.

7. Motorsteuerung nach Anspruch 4, **dadurch gekennzeichnet**, daß der Motorstrom aus dem Verhältnis Pulsdauer zu Pulspause des PWM-Signals und/oder aus der Motordrehzahl bestimmt wird.

8. Motorsteuerung nach Anspruch 7, **dadurch gekennzeichnet**, daß die Steuerung einen Integrator (2) aufweist, der aus dem Puls/Pausenverhältnis des PWM-Signals ein Steuersignal (S) erzeugt.

9. Motorsteuerung nach Anspruch 8, **dadurch gekennzeichnet**, daß die Steuerung weiterhin ein Flip-Flop (5) aufweist, dessen Q-Ausgang zusammen mit dem PWM-Steuersignal die Eingänge eines ODER-Gatters bilden, so daß mit dem Eintreffen des Kommutierungssignals (I) der Q-Ausgang auf logisch "1" geschaltet wird, und der Q-Ausgang wieder zurückgesetzt wird, wenn das Steuersignal (S) mit einer Referenzspannung (U_{REF}) übereinstimmt.

10. Motorsteuerung nach Anspruch 9, **dadurch gekennzeichnet**, daß der Vergleich zwischen der Referenzspannung (U_{REF}) und dem Steuersignal (S) mittels eines Differenzverstärkers (4) erfolgt.

## Claims

1. Motor controller for electronically commutated DC motors, in which an additional current and/or voltage is connected to the active motor winding from the commutation instant in order to prevent torque drops, **characterized in that** the duration and/or amplitude of the additional current and/or voltage pulse is derived from the motor load.

2. Motor controller according to claim 1, **characterized in that** the motor is driven by pulse-width modulation (PWM).

3. Motor controller according to claim 2, **characterized in that** the PWM signal is held at logic "1" for the duration of the additional current and/or voltage.

4. Motor controller according to one of the preceding claims, **characterized in that** the commutation instant is determined by a sensor.

5. Motor controller according to one of the preceding claims, **characterized in that** the motor load is determined from the motor current drawn.

6. Motor controller according to claim 5, **characterized in that** the motor current is determined by a measurement resistor in the motor current circuit.

7. Motor controller according to claim 4, **characterized in that** the motor current is determined from the ratio of the pulse duration to the pulse pause in the PWM signal and/or from the motor rotation speed.

8. Motor controller according to claim 7, **characterized in that** the controller has an integrator (2) which produces a control signal (S) from the duty ratio of the PWM signal.

9. Motor controller according to claim 8, **characterized in that** the controller furthermore has a flipflop (5) whose Q output together with the PWM control signal form the inputs of an OR gate, so that the Q output is switched to logic "1" on the arrival of the commutation signal (I), and the Q output is reset again when the control signal (S) corresponds with a reference voltage (U_{REF}).

10. Motor controller according to claim 9, **characterized in that** the comparison between the reference voltage (UREF) and the control signal (S) is carried out by means of a differential amplifier (4).

## Revendications

1. Contrôle de moteur pour moteurs à courant continu par commutation électronique, où pour empêcher les chutes du couple, un courant et/ou une tension additionnel est appliqué à la ligne active du moteur à partir de l'instant de commutation, **caractérisé en ce que** la durée et/ou l'amplitude de l'impulsion de courant et/ou de tension additionnelle est déduite de la charge du moteur.

2. Contrôle de moteur selon la revendication 1, **caractérisé en ce que** le moteur est amorcé via une modulation de largeur d'impulsion (PWM).

3. Contrôle de moteur selon la revendication 2, **caractérisé en ce que** le signal PWM est maintenu sur le niveau logique "1" pendant la durée du courant et/ou de la tension additionnel.

4. Contrôle de moteur selon une des revendications précédentes, **caractérisé en ce que** l'instant de commutation est déterminé par un détecteur.

5. Contrôle de moteur selon une des revendications précédentes, **caractérisé en ce que** la charge du moteur est déterminée à partir du courant du moteur recueilli.

6. Contrôle de moteur selon la revendication 5, **caractérisé en ce que** le courant du moteur est déterminé par une résistance de précision dans le circuit électrique du moteur.

7. Contrôle de moteur selon la revendication 4, **caractérisé en ce que** le courant du moteur est déterminé à partir du rapport durée d'impulsion sur intervalle d'impulsion du signal PWM et/ou à partir du régime du moteur.

8. Contrôle de moteur selon la revendication 7, **caractérisé en ce que** le contrôle présente un intégrateur (2), qui produit un signal de contrôle (S) à partir du rapport impulsion/intervalle du signal PWM.

9. Contrôle de moteur selon la revendication 8, **caractérisé en ce que** le contrôle présente d'autre part une bascule (5) dont la sortie Q et le signal de contrôle PWM forment les entrées d'une porte OU, de sorte qu'avec l'intervention du signal de commutation (I), la sortie Q soit commutée sur le niveau logique "1" et que la sortie Q soit réinitialisée lorsque le signal de contrôle (S) correspond à une tension de référence (U_{REF}).

10. Contrôle de moteur selon la revendication 9, **caractérisé en ce que** la comparaison entre la tension de référence (UREF) et le signal de contrôle (S) a lieu au moyen d'un amplificateur différentiel (4).
